# EUROPEAN PATENT APPLICATION

(11) **EP 1 668 993 A1**
(43) Date of publication of application: **14.06.2006**
(21) Application number: 04078343.3
(22) Date of filing: 10.12.2004
(51) Int. Cl.: A23L 1/182, A23L 1/18

(54) **Quick cooking and instant rice and process to make the same**

(71) Applicant: UNILEVER N.V., 3013 AL Rotterdam (NL)
(72) Inventor: Blonk, Johannes C. G. Unilever R&D Vlaardingen, 3133 AT Vlaardingen (NL); Hemelaar, Maria J. A. T. Unilever R&D Vlaardingen, 3133 AT Vlaardingen (NL)
(74) Representative: Wurfbain, Gilles L.

(57) **Abstract**

A process for preparing rice by subjecting a rice to a precooking step to specified gelatinisation, a partial drying step to specified moisture content, followed by subjecting so-obtained rice to a heat treatment in a hot inert gas stream at a specific temperature and for a specific time, while being in a fluidised bed and in a swirling motion. The so-obtained rice can have quick cooking or instant behaviour: it can be ready for consumption by cooking for 3-5 minutes or which can be ready by soaking in hot water for 4-6 minutes, and which rice has good eating properties.

## Description

Rice is in many countries the main component of the daily meal. In general untreated rice is used in these countries to prepare their rice-based meals. For this the untreated rice is added to water or boiling water, the mixture is brought to boil and the rice is cooked. In general the cooked rice (after all water is absorbed by rice) is kept to stand for some time which is described as "standing time". This whole process takes about 15-40 min for white milled rice and results in a cooked rice with very good product characteristics such as cohesion, adhesion, even texture without grittiness/sandiness, and good taste.

The quality of e.g. quick cooking or instant rice can be quantified, e.g. by scores to describe attributes like cohesion and bite of rice prepared. Such scores can be rated on a scale of 1 to 5, as evaluated sensorically by a panel.

Cohesion is described as the ability of the rice after cooking to hold together as a mass during mastication. Score 1 means separate kernels and no cohesion, while 5 means the formation of a clump in the mouth and much cohesion.

Bite is being defined as the degree in which the rice provides a full mouthfeel during mastication.

The internal microstructure of the rice can be assessed by visualisation using X-ray microtomography (XRT). For this, rice kernels can be mounted onto a holder and a standard 3-D tomographic data set can be acquired. Reconstruction of this data set using back projection can yield a 3-D image showing both the distribution of pores inside the rice kernel and the distribution of walls between the pores.

The number of pores, the pore size distribution and the wall thickness distribution can be obtained from longitudinal sections, chosen at or near the central longitudinal axis of the 3-D reconstructed XRT data set. Basic image analysis can be used to obtain quantitative data on number of pores, pore size distribution (D_{4,3}) and wall thickness distribution.

The structure and texture of the surface of the kernel, including the porosity of the surface of the rice kernel can be visualised by Scanning Electron Microscopy (SEM). Kernels are fixed onto a holder and standard operation of SEM yields images in which the microstructure of the surface can be assessed.

The time of 15-25 min for the preparation of a cooked rice is considered nowadays as unacceptably long. Therefore, attempts were made to find new processes resulting in new types of rice that would reduce the preparation times thereof. These attempts resulted in for example the finding of an instant rice made by a wet process (EP 17040) wherein the rice is soaked, cooked with excessive water, steamed and subsequently dried or by a gun puffing process (US 4520574) wherein the rice is conditioned up to about 20% moisture and expanded in a puffing gun at low pressure.

The instant rice so obtained could be prepared for eating by adding boiling water to the rice, stirring the mixture and standing for 5 min. However, the rice so obtained had a number of drawbacks such as the rice showed little adhesion and was soft, while the rice displayed hardly any springiness, which is required to achieve an acceptable eating performance and was watery and tasteless

In an alternative process a quick cooking rice was obtained by a wet processing wherein the rice is cooked up to 30-40% moisture, rolled, bumped to flatten and subsequently dried (EP 672353). This product could be cooked within 7-25 minutes which includes cooking and standing time, depending on the nature of the rice used. In general the preparation time consists of several types of treatments at fixed times, which thus it is not very convenient. Moreover, the products obtained displayed insufficient mouthfeel and taste, while the springiness and cohesion of the product was unacceptable.

According to a further alternative method a quick cooking rice was made by subjecting a rice to direct hot air at 400-600 °C in at least two cyclones for 10-15 sec (US 4478862). The rice so obtained could be cooked within 4-8 min, but the cooked rice displayed grittiness and showed during cooking an uneven appearance due to presence of chalky grains as well as transparent grains at the same time. Further had the rice an uneven structure, especially in rice varieties like Indonesian IR64, resulting in an uneven thickness of the outer, not sponge-like region of the kernel, in the presence of very large holes (> 1 mm), and cracks extending from the outer region deep into the sponge-like interior of the kernel, and resulting in undesired broken rice kernels during cooking.

WO 00/44244 discloses a process for preparing quick cooking rice with good properties. This yields rice with cooking times of 7-10 minutes, depending upon the rice used. There is, however, a need for a rice with even reduced cooking times, and rice having a more instant character, e.g. to make it suitable for snack applications. Such instant character means herein rice which can be consumed after pouring over boiling water to the rice concerned, and leaving the rice to soak for several minutes (whereby care is taken that the temperature of the rice/soaking water does not drop below 75°C), after which a possible excess water can be drained off. Such instant process does not need actual supply of heat or cooking or steaming during the process of preparation. Such instant preparation is typically suitable for small amounts of rice being prepared, e.g. 1 or 2 portions of 80 g. In order to prevent cooling below 75°C whilst soaking it may be convenient to practice this in an isolated cup, e.g. foamed polysterene cup, preferably with a lid. With larger amounts of rice more water is to be used to ensure maintenance of the temperature, or such should proceed well isolated, or moderate heat should be applied.

Therefore, it was studied whether a new process could be found that would produce a rice with less of the disadvantages set out above. This study resulted in the finding of such a new process and in the development of a new rice that gave good properties after cooking or contact with hot (at least 90°C from the start, temperature of rice/water mixture not dropping to below 75°C) water for several minutes (as described above).

Such rice can be described as a quick cooking or instant rice with a preparation time for eating purposes of less than 7 minutes, wherein of the rice before cooking or instant heating:
- the average number of pores, having a diameter larger than 0.05 mm, ranges from 1 to 20 per square mm, preferably from 2 to 6 per square mm cross-section of a rice grain,
- the pore size distribution of a grain, defined as volume weighted mean diameter (D_{4,3}) ranges from 0.5 to 1.6 mm, preferably from 0.7 to 1.3 mm,
- the average thickness of the walls between the pores of a grain as observed in by 3-D XRT images ranges from 0.02 to 0.16 mm, preferably from 0.04 to 0.10 mm,
- and wherein the surface of the rice grain contains per mm² 5-200 pores ranging from 1 to 50 µm, preferably 5-50 pores ranging from 5 to 30 µm.

In the above, said properties of the internal structure of the rice grain are given just before the last preparation step (i.e. in the uncooked state as marketed, and before the last quick cooking or instant heating by the consumer). These properties can be visualised by XRT and from the obtained, reconstructed 3-D data set images of longitudinal cross sections at or close to the longitudinal axis of the rice kernel can be chosen. These images can be analysed using basic image analysis techniques as described herein before.

It was also found that such uncooked rice grain preferably has a surface which has no transversal or longitudinal cracks broader than 100 µm (preferably no transversal or longitudinal cracks broader than 50 µm) and longer than 300 µm (preferably no transversal or longitudinal cracks longer than 100 µm).

It was also found that of the uncooked rice grain the thickness of the outer surface layer of the uncooked rice grain as observed in the said longitudinal cross section at 90% of the cumulative size distribution is less than 0.20 mm, preferably less than 0.15 mm.

The rice as described above in the uncooked state (i.e. the state in which the consumer buys it) can be prepared to a dish suitable for consumption in a short time. Mainly two possible ways of preparation can be distinguished:
- having the rice in water which is kept boiling for most of the time and which requires input of external heat or energy, or
- adding water of at least 90°C to the rice (or adding the rice to water of at least 90°C) without putting further heat or energy in after the rice and hot water have come in contact, with the proviso that the temperature of the rice and water for the few minutes preparation time does not drop to below 75°C.

The first preparation method above will herein be referred to as "quick cooking" and the second as "instant".

The quick cooking method can e.g. involve measuring quantities of water and rice, bringing the water to the boil, and adding the rice (or combining measured amounts of rice and cold water followed by heating to boiling), leaving the rice and water boiling for several minutes, and when the rice is sufficiently cooked optionally excess water can be drained. It was found that the rice according to the invention usually needs 3-5 minutes preparation time using such quick cooking method (the time e.g. depending on the variety of rice and origin). Thus, the invention further relates to the rice as described above (in terms of transversal/longitudinal cracks, porosity, and number of pores on the surface), which rice requires 3-5 minutes cooking in water for eating purposes.

The method described above as "instant" can e.g. involve heating water to (near) boiling, adding such (near) boiling water to the rice in e.g. a bowl, and leave for a few minutes, optionally and when the rice is left sufficiently long in the hot water optionally excess water can be drained. As no heat or energy is applied during these minutes, such instant preparation time is slightly longer than the "quick cooking" method, and the combination rice/hot water slowly cools down. Preferably water is used in the instant method which is also boiling when adding the rice thereto, it can also be performed with water at near boiling temperatures, e.g. at least 90°C or preferably at least 95°C, and which water plus rice does not cool down to below 75°C. It was found that the rice according to the invention, when boiling or nearly boiling water is poured over it, can yield in 4-6 minutes standing in such water a rice with good eating properties. Thus, the present invention also relates to rice as defined above (in terms of transversal/longitudinal cracks, porosity, and number of pores on the surface), which requires 4-6 minutes soaking in hot water which water at the start of soaking is at least 90°C temperature, and which water plus rice does not cool down to below 75°C during these 4-6 minutes.

The rice according to the present invention allows short preparation times (as set out above) and still can give a product which has good bite and cohesion after cooking or heating in an instant way.

Compared to existing instant rice the outer appearance of the uncooked rice is smooth (i.e. not cracked), with very small holes pores in the outer layer or skin, covering a porous structure as described above. In contrast to this, existing instant rice usually has large cracks in the outer layer of the rice grain, and not the small pores in the outer layer or skin. It is believed that these small holes (or pores) in the outer layer or skin are a result of the preparation (as will be described below). Without wishing to be bound by theory, it is believed that the presence of small holes and and/or absence of comparatively large cracks have both an important role in the water absorption capacity of the rice kernels and thus in both the cooking time of the rice kernels as well as in the cohesion and bite of the cooked rice.

The rice kernels according to this invention further display a bulk density (as measured by weighting one liter of the rice kernels) of 0.2 to 0.45 kg/l.

The improved appearance of our novel rice kernels can be illustrated by the fact that our novel rice kernels have a considerable internal coherence, because after cooking for about 5 min at about 100°C in water the amount of broken rice kernels has increased with less than 20 %, in particular with less than 15 % as a result of the cooking.

The present invention further relates to the use of rice as set out above in a process for preparing rice for consumption which process comprises cooking the rice in water for 3-5 minutes. This is the so-called "quick cooking" method.

The invention also relates to the use of rice as set out above in a process for preparing rice for consumption which process comprises 4-6 minutes soaking in hot water which water at the start of soaking is at least 90°C, preferably at least 95°C, more preferably at boiling temperature, and which water does not cool down to below 75°C during these 4-6 minutes.

Thus, the invention also relates to a process for preparing rice ready for consumption, which process comprises the step of cooking rice according to claim 1-4 in water for 3-5 minutes. Likewise, the invention further relates to a process for preparing rice ready for consumption, which process comprises 4-6 minutes soaking in hot water which water at the start of soaking is at least 90°C, preferably at least 95°C, more preferably at boiling temperature, and which water does not cool down to below 75°C during these 4-6 minutes.

The rice kernels according to the present invention can be obtained by a process for preparing a quick cooking or instant rice, the process comprising the steps of:
- cooking or steaming rice kernels to a gelatinisation of 90-100%
- drying the cooked or steamed rice kernels to a moisture content of 5-20%, preferably 10-15%,
- subjecting the partially dried rice kernels to a heat treatment in a hot inert gas stream having a temperature of 220-300°C while being in a fluidised bed and while bringing the rice kernels in a swirling motion in said gas stream for 10-30 seconds.

In the above process, the temperature of said gas stream is preferably 250-290°C. If the gas is too hot (e.g. above 300°C) the grain risks partial or surface burning, whereas at too low temperatures (below 220°C) the right structure will not be obtained so easily.

The treatment time wherein the rice kernels are in the hot gas stream is preferably 15-25 seconds.

It is preferred to use air as gas in this process.

The gas stream used preferably has a velocity of 4-50 m/second, preferably 5-25 m/second. In a preferred embodiment the gas is recirculated in the process during and after separation of the rice kernel particles.

It can be advantageous to perform the process as set out herein as a batch process.

According to a preferred process the kernels of rice are treated in a hot gas stream, often hot air, which is passed through means which provide preferably a high velocity swirling action to the gas and rice kernels in the gas stream in the lower half of a process chamber. In this part, the heavy, moist rice grains loose most of their moisture. When more moisture is lost, the lighter grains tend to move upwards.

The process can be carried out in a toroidal bed. The principles of the toroidal bed technology are disclosed in a number of patent applications. For reference the following patents are indicated: EP 68853; EP 288141; EP 382769; EP 293103; and EP 346004. All these patents disclose toroidal bed technology that can be applied in our processing. However, none of these patents discloses the use of this technology on the preparation of quick cooking or instant rice products. A very beneficial process for the preparation of rice products is disclosed in WO01/12287. According to this processing the rice kernels have horizontal and vertical velocity components.

Evaluation of the cooked rice obtained by this process demonstrated that the products after cooking have good cohesion properties and display a good bite.

### EXAMPLES

### Example 1

A commercial Italian medium grain parboiled rice (Loto ribe) is used for this application. 150 gram of rice is treated according to the described processing method given the following processing conditions: temperature of 280°C in processing chamber of a pilot machine, processing time of 17 seconds. Cooling time of 10 minutes at room temperature (20°C). The treated rice was stored in bags until use.
60 gram of this rice was put in 200 ml of water and the water was brought to boil. When boiling the heat was lowered to simmer and the rice is stirred occasionally. After 4 minutes the rice has taken up all the water and could be eaten immediately after cooking, when cooled down to temperatures at which rice is normally eaten and if desirable with added condiments. The rice had a taste, texture, cohesion and bite comparable to parboiled rice.

### Example 2

The whole milled white rice (Jasmin) kernels are treated as follows: Soak the rice in an excess amount of water (40-70°C) for 15 minutes. Drain the rice and steam it in a steaming pan (lab equipment: pan heated by gas; atmospheric pressure) for about 45 minutes. Gelatinisation was substantially complete. To prevent lumping and stickiness of the kernels water is sprayed on the rice and the rice is stirred every 5 minutes. The rice is dried to a moisture content of 8-15% in a climate cabinet (30°C/50% relative humidity). The rice was loosened several times to prevent lumping of the kernels.
Batches of 250 gram of rice were treated according to processing method described above with the following processing conditions: temperature of 280°C in processing chamber of pilot machine, processing time of 14 seconds. Cooling time of 15 minutes at roomtemperature (20°C). The treated rice was stored in closed bags until use. 60 gram of this rice was put into a polystyrene cup and poured over with an excess amount of boiling water. The mixture was stirred once and the cup was closed with a lid. After 5 minutes the rice was drained and the rice could be eaten immediately when cooled down to temperatures at which rice is normally eaten. The rice had good eating properties: not gritty and with a good cohesion and bite.

### Example 3

The whole milled white rice (Jasmin) kernels are treated as follows: Soak the rice in an excess amount of water (70°C) for 10 minutes. Moisture content after soaking 25-35%. Afterwards the rice was cooked in a pressure cooker (1,2 bar) for 20 minutes. Gelatinisation was substantially complete. The rice was spread out and conditioned at roomtemperature (20°C) till a moisture content of 10-15%. The rice was loosened several times to prevent lumping of the kernels.
Batches of 250 gram of rice were treated according to the processing method as described above with the following processing conditions: temperature of 280°C in processing chamber of pilot machine, processing time of 14 seconds. Cooling time of 15 minutes at roomtemperature (20°C). The bulk density of the rice was 0.2 g/ml. and a moisture content of 8.4%. The treated rice was stored in closed bags until use.
An excess amount of water was brought to boil and the rice was cooked for 5 minutes. After 5 minutes the rice was drained and could be eaten immediately after cooking, when cooled down to temperatures at which rice is normally eaten and if desirable with added condiments. The rice had a neutral white rice taste and a good bite.

## Claims

1. A quick cooking or instant rice with a preparation time for eating purposes of less than 7 minutes, wherein of the rice before cooking or instant heating:
- the average number of pores, having a diameter larger than 0.05 mm, ranges from 1 to 20 per square mm, preferably from 2 to 6 per square mm cross-section of a rice grain,
- the pore size distribution of a grain, defined as volume weighted mean diameter (D_{4,3}) ranges from 0.5 to 1.6 mm, preferably from 0.7 to 1.3 mm,
- the average thickness of the walls between the pores of a grain as observed in by 3-D XRT images ranges from 0.02 to 0.16 mm, preferably from 0.04 to 0.10 mm,
- and wherein the surface of the rice grain contains per mm² 5-200 pores ranging from 1 to 50 µm, preferably 5-50 pores ranging from 5 to 30 µm.

2. Rice according to claim 1, wherein the uncooked rice has a surface which has no transversal or longitudinal cracks broader than 100 µm and longer than 300 µm.

3. Rice according to claim 1-2, the thickness of the outer surface layer of the uncooked rice grain as observed in the said longitudinal cross section at 90% of the cumulative size distribution is less than 0.20 mm.

4. Rice according to claim 1-3, which requires 3-5 minutes cooking in water for eating purposes.

5. Rice according to claim 1-4, which requires 4-6 minutes soaking in hot water which water at the start of soaking is at least 90°C and which water is maintained at least at 75°C.

6. Process for preparing a quick cooking or instant rice, the process comprising the steps of:
- cooking or steaming rice kernels to a gelatinisation of 90-100%
- drying the cooked or steamed rice kernels to a moisture content of 5-20%, preferably 10-15%,
- subjecting the partially dried rice kernels to a heat treatment in a hot inert gas stream having a temperature of 220-300°C while being in a fluidised bed and while bringing the rice kernels in a swirling motion in said gas stream for 10-30 seconds.

7. Process according to claim 6, wherein the temperature of said gas stream is 250-290°C.

8. Process according to claims 6-7, wherein the rice kernels are in said hot gas stream for 15-25 seconds.

9. Process according to claims 6-8, wherein air is applied as gas.

10. Process according to claims 6-9, wherein the gas stream has a velocity of 4-50 m/second, preferably 5-25 m/second.

11. Process according to claims 6-10, wherein the gas is recirculated in the process during and after separation of the rice kernel particles.

12. Process according to claims 6-11, wherein the process is performed as a batch process.

13. Use of rice according to claims 1-5 in a process which process comprises cooking the rice in water for 3-5 minutes.

14. Use of rice according to claim 1-5 in a process which process comprises 4-6 minutes soaking in hot water which water at the start of soaking is at least 90°C and which water is maintained at least at 75°C.

15. Process for preparing rice ready for consumption, which process comprises the step of cooking rice according to claim 1-4 in water for 3-5 minutes.

16. Process for preparing rice ready for consumption, which process comprises 4-6 minutes soaking in hot water which water at the start of soaking is at least 90°C and which water is maintained at least at 75°C.
